# EUROPÄISCHE PATENTSCHRIFT

(11) **EP 3 308 740 B1**
(45) Veröffentlichungstag und Bekanntmachung des Hinweises auf die Patenterteilung: **21.06.2023**
(21) Anmeldenummer: 17203563.6
(22) Anmeldetag: 23.07.2013
(51) Int. Cl.: A61C 13/15

(54) **LICHTHÄRTGERÄT FÜR DENTALRESTAURATIONSMATERIALIEN**
LIGHT CURING DEVICE FOR DENTAL RESTORATION MATERIALS
APPAREIL DE DURCISSEMENT À LA LUMIÈRE POUR MATÉRIAUX DE RESTAURATION DENTAIRE

(43) Veröffentlichungstag der Anmeldung: 18.04.2018
(62) Teilanmeldung aus: 13177641.1
(73) Patentinhaber: Ivoclar Vivadent AG, 9494 Schaan (LI)
(72) Erfinder: BENZ, Oliver, 9494 Schaan (LI)
(74) Vertreter: Baldus, Oliver

(56) Entgegenhaltungen:
- WO-A1-2004/002361
- WO-A1-2009/052016
- US-A- 6 008 264
- US-A1- 2010 140 450
- US-B1- 6 602 074
- US-B1- 8 106 600

## Beschreibung

Die Erfindung betriff ein Lichthärtgerät für Dentalrestaurationsmaterialien, gemäß dem Oberbegriff von Anspruch 1.

Lichthärtgeräte werden typischerweise mit vorgegebenen Belichtungszeiten betrieben, während derer eine Polymerisation der zu polymerisierenden Dentalmaterialien stattfindet.

Die Belichtungszeit wurde typischerweise als entscheidend angesehen, um zu gewährleisten, dass das vorher an der Restaurationsstelle aufgebrachte bzw. eingebrachte Dentalmaterial ausreichend durchgehärtet wird, jedoch ohne spröde zu werden.

Polymerisierbare Dentalmaterialien können sowohl durch Lichthärtung als auch durch Wärmehärtung als auch durch Kombinationen dieser ausgehärtet werden. Bei der Entwicklung derartiger Dentalmaterialien ist man bemüht gewesen, für eine möglichst gleichmäßige Durchhärtung zu sorgen. In dem Bestreben, eine Vergleichsmäßigung zu erzielen, hat man auch lange Härtzeiten in Kauf genommen, die tatsächlich Anfang der Neunziger Jahre mit den seinerzeit häufig verwendetetn Halogenlampen keine schlechten Ergebnisse erbrachten, jedoch für den Patienten unangenehme lange Behandlungszeiten erforderten.

Um die Durchhärtung besser zu steuern, aber auch um die Belästigung des Patienten zu minimieren, wurden Ende der Neunziger Jahre Vorhärtprozesse entwickelt, wie es beispielsweise aus der EP 1 046 381 A1 ersichtlich ist. Derartige Vorhärtprozesse erlaubten es, die Haupthärtzeit zu verkürzen. Überraschenderweise ergab sich jedoch in manchen Fällen, dass eine Verkürzung der Haupthärtzeit nicht möglich war, ohne zu riskieren, dass die Durchhärtung nicht vollständig war. Eine nicht vollständige Durchhärtung beschwört andererseits die Gefahr herauf, dass freie Radikale vorhanden sind, deren cancerogene Wirkung derzeit noch nicht ausgeschlossen ist.

Die Druckschrift US 8,106,600 B1 betrifft eine Photopolymerisationsvorrichtung mit einem Gehäuse; einer Multiwellenlängen-Leuchtdiode, einem Kühlkörper und einer Timingschaltung, die ein Mikrocontroller ist.

Die Druckschrift WO 2004/002361 A1 betrifft Verfahren zur Herstellung von Dentalmaterialien aus härtbaren Dentalmassen mit im allgemeinen sequenzieller Härtung.

Die Druckschrift WO 2009/052016 A1 betrifft eine lichtemittierende Vorrichtung zum Aushärten von Dentalmaterial, die in einem ersten oder einem zweiten Betriebsmodus betreibbar ist.

Die Druckschrift US 6,008,264 A betrifft die Verwendung von Lichtquellen zum Härten polymerer Materialien, die in der Zahnmedizin verwendet werden, um die Nachhärtungseigenschaften der Materialien anzupassen, um gewünschte physikalische Eigenschaften in den Materialien zu erreichen.

Die Druckschrift US 6,602,074 B1 betrifft Lichthärtungsvorrichtungen und Verfahren zur Herstellung von Dentalrestaurationen.

Die Druckschrift US 2010/140450 A1 betrifft eine Vorrichtung oder Lampe zum Photopolymerisieren von Materialien zum Füllen zur Anwendung auf dem Gebiet der Zahnmedizin.

Bekanntlich neigen lichthärtende Dentalmaterialien wie Polymethylmethacrylat in einem - wenn auch geringem Umfang - auch dazu, beim Lichthärten ihr Volumen zu verringern, also zu schrumpfen. Um zu verhindern, dass durch die Schrumpfung des Dentalmaterials Randspalten entstehen, hat man versucht, der Schrumpfung dahingehend entgegenzuwirken, dass zunächst die tief liegenden Schichten des Dentalmaterials ausgehärtet werden, dann die darauffolgenden, und schließlich die Deckschichten.

Eine derartige Härtung ist aber praktisch nur durch schichtweise Härtung der Dentalmaterialien möglich, was entsprechend zeit- und arbeitsaufwendig ist. Eine derartige Lösung ist aus der WO 2004/002361 A1 bekannt.

Ferner ist es bereits vorgeschlagen worden, bei Lichthärtgeräten eine fest vorgegebene Leistungsabfolge vorzusehen, beispielsweise eine Einschaltung des Lichthärtgeräts mit reduzierter Leistung, dann eine Zeitdauer ohne Leistung und dann eine Zeitdauer mit voller Leistung. Mit dieser Lösung sollte die Randspaltenbildung reduziert werden. Aus der WO 2009/052016 A1 ist eine Lösung bekannt, bei der der Benutzer das Gerät entweder sofort mit voller Lichtintensität aktivieren, indem er den Aktivierungsknopf des Geräts kurz drückt und loslässt, oder die Lichtintensität sanft erhöhen, indem er die Taste gedrückt hält, bis die volle Lichtintensität erreicht ist. Diese beiden Lösungen einer Einschaltung des Lichthärtgeräts mit reduzierter Leistung eignen sich jedoch nur für Dentalrestaurationen recht geringer Tiefe, denn durch die Lichthärtung mit reduzierter Leistung wird im Grunde hauptsächlich die Oberfläche der Dentalrestauration gehärtet, während die Lichtabgabe mit hoher Leistung auch in tiefere Schichten der Dentalrestauration eindringt. Insofern hat diese feste Abfolge eher einen ungünstigen Effekt.

Neuerdings wurden auch Lichthärtungsvorrichtung vorgeschlagen, welche eine einzelne Leuchtdiode (LED) mit mehreren Wellenlängen aufweisen. Eine derartige Ausgestaltung ist beispielsweise aus der US 8 106 600 B1 bekannt.

In den 2000er Jahren nahm die Lichtleistung von LED-Chips signifikant zu, und es wurden insbesondere Leuchtdioden entwickelt, deren Emissionsmaximum mit dem spektralen Empfindlichkeitsmaximum von Campherchinon, dem bevorzugten Photoinitiator für PMMA, zusammenfiel oder zumindest nur in geringem Maße abwich. Dies ermöglichte eine drastische Reduktion der erforderlichen Zeit für einen Polymerisationszylklus. Aufgrund der zunehmenden Leistung wurde jedoch zugleich die Überhärtung kritischer, so dass die Hersteller von Dentalgeräten dazu übergegangen sind, feste Zeiten für die Polymerisation vorzugeben, also beispielsweise 5,10 oder 15 Sekunden, mit der Maßgabe, je nach Größe der Dentalrestauration die entsprechende Einstellung vorzunehmen.

Demgegenüber liegt der Erfindung die Aufgabe zugrunde, ein Lichhärtgerät für Dentalrestaurationsmaterialien zu schaffen, das eine verbesserte Möglichkeit der Anpassung gerade auch bei großen und tiefen Dentalrestaurationen ermöglicht.

Diese Aufgabe wird erfindungsgemäß durch Anspruch 1 gelöst. Vorteilhafte Weiterbildungen ergeben sich aus den Unteransprüchen.

Erfindungsgemäß besonders günstig ist es, dass das neue Lichthärtgerät eine Steuerung einer reduzierten Dosis von Licht nach Wahl des Benutzers ermöglicht. Überraschend ergibt sich durch die Steuerung der Dosis eine wesentlich bessere Kontrolle über den Grad der Vorhärtung als bei einer reinen Leistungssteuerung - oder aber einer reinen Zeitsteuerung -. Dies ermöglicht es, dass der Zahnarzt - oder gegebenenfalls der Zahntechniker - an dem Dentalrestaurationsteil noch weitere Anpassungen vornimmt, nachdem es zunächst bereits durch das Vorhärten etwas viskoser gemacht ist.

Die Einstellung der Dosis für das Vorhärten lässt sich in weiten Bereichen vorab an die Erfordernisse anpassen. So kann beispielsweise eine recht kurze Vorhärtzeit mit einer recht hohen Vorhärtleistung kombiniert werden, wenn es gilt, recht große und tiefliegende Dentalrestaurationen vorzuhärten.

Durch die Anpassung lässt sich der Härtegradient über die Tiefe der Dentalrestauration in weiten Bereichen an die Erfordernisse anpassen.

Erfindungsgemäß bevorzugt ist es in diesem Zusammenhang, wenn die Härte an der Basis der Dentalrestauration 80% oder mehr der Härte an der Oberfläche beträgt. Bevorzugt wird insofern bei tiefen Dentalrestaurationen mit einer vergleichsweise kurzen Vorhärtzeit - und dementsprechend hohen Leistung - gearbeitet, während flache Dentalrestaurationen demgegenüber besser mit einer längeren Vorhärtzeit und dementsprechend geringeren Leistung vorgehärtet werden.

Besonders günstig ist es, dass der Vorhärtzyklus unabhängig von dem Haupthärtzyklus ist. Der Benutzer kann dann zunächst zu einem beliebigen, von ihm gewählten Zeitpunkt, die Vorhärtung vornehmen. Bei mehreren zu bearbeitenden Dentalrestaurationen kann er auch nacheinander diese vorhärten und nach Abschluss der Vorhärtung für alle Dentalrestaurationen das Lichthärtgerät ablegen und dann eine visuelle Kontrolle vornehmen und gegebenenfalls die erwünschten Nacharbeitungen oder Anpassungen vornehmen. Durch erneutes Andrücken der Dentalrestaurationen lassen sich auch gut die minimalen Schrumpfungen des Dentalrestaurationsmaterials während der Vorhärtzeit kompensieren.

Demnach wird gezielt eine beliebig lange Pausenzeit eingeschaltet, während derer das Dentalrestaurationsmaterial gegebenenfalls auch abkühlen kann. In dieser Zeit lassen sich beispielsweise auch automatische Kontrollen durchführen, beispielsweise auch mit einer Digitalcamera, die die vorgehärtete Dentalrestauration erfaßt und eine Bilderkennung vornimmt, um gegebenenfalls ein Nacharbeiten zu ermöglichen.

Zu einem beliebigen Zeitpunkt lässt sich dann die Haupthärtzeit anschließen, wobei es bevorzugt ist, dass das Lichthärtgerät dann in einen Haupthärtmodus umgeschaltet wird. Bevorzugt verbleibt das Lichthärtgerät also im Vorhärtmodus - auch wenn es zwischenzeitlich abgelegt wird und im Ruhezustand ist -, bis der Benutzer durch ein weiteres Auslöseelement oder eine erneute Betätigung des Vorhärtmodus-Auslöseelements explizit den Haupthärtmodus einschaltet.

Gemäß der Erfindung ist es vorgesehen, die reduzierte Dosis signalisieren zu lassen. Dies kann in beliebiger geeigneter Weise erfolgen, beispielsweise durch eine Änderung der Lichtfarbe, ein Blinken der Lichtquelle, ein wiederholtes Ein- und Ausschalten im Sinne einer gepulsten Vorhärt-Lichtabgabe oder beispielsweise durch eine zusätzliche Leuchtdiode, die den Vorhärtmodus symbolisiert.

In vorteilhafter Ausgestaltung ist es vorgesehen, das Dentalrestaurationsmaterial in Schichten zur Bildung der fertigen Dentalrestauration aufzubringen. Diese Ausgestaltung ist insbesondere dann sinnvoll, wenn die Tiefe der Dentalrestauration mehr als 2mm beträgt. Bevorzugt lässt sich dann die erste Schicht in einer Schichtstärke von beispielsweise 1mm auftragen und vorhärten.

Durch das Vorhärten wird die Schicht aus einem flüssigen Aggregatzustand in einen zähviskosen Aggregatzustand überführt, in der sie im Grunde formtreu bleibt. Nach visueller Kontrolle wird dann gegebenenfalls ein erneutes Andrücken vorgenommen und die zweite Schicht aufgetragen. Die zäh-viskose erste Schicht verbindet sich dass besonders gut mit der zweiten Schicht. Gegebenenfalls wird dann erneut ein Vorhärtschritt vorgenommen, um eine optimale Formanpassung zu gewährleisten.

Beim Haupthärten wird durch die hohe Leistung dann die tiefliegende Schicht ohne weitere erreicht und zusammen mit der Deckschicht durchgehärtet.

Dieses Durchhärten lässt sich auch mit einem Modus mit erhöhter Leistung realisieren, bei welchem das Lichthärtgerät eine Leistung zwischen 5 und 20 Watt/cm² abgibt und insofern durch sehr hohe Leistung gepaart mit einer entsprechend verkürzten Einschaltzeit die erforderliche Dosis für das Durchhärten bereitstellt.

In weiterer vorteilhafter Ausgestaltung ist es vorgesehen, die erfindungsgemäß reduzierte Dosis so zu wählen, dass sie das Dentalrestaurationsmaterial viskos macht, insbesondere zähviskos. In diesem Zustand lässt sich das Dentalrestaurationsmaterial gut modellieren, ähnlich einer Knetmasse, so dass die Formgebung wesentlich erleichtert ist.

Erfindungsgemäß besonders günstig ist daher ein Modellierschritt, der zwischengeschaltet wird, so dass die Abfolge erfindungsgemäß lautet: Vorhärtschritt - Modellierschritt - Haupthärtschritt. In Abwandlung hiervon lassen sich beliebige Vorhärtschritte mit Modellierschritten bei mehreren Schichten kombinieren, und es ist auch möglich, das Modellieren mehrerer nacheinander vorgehärteter Dentalrestaurationen in einem Zuge, also als kombinierter Modellierschritt vorzunehmen, so dass mehrere nebeneinanderliegende Dentalrestaurationen in einem Zuge, also ohne dass zwischenzeitlich ein Lichthärtgerät in die Hand genommen werden muss, modelliert werden können.

In weiterer vorteilhafter Ausgestaltung ist der Vorhärtmodus mit einer langwelligeren Lichtabgabe verbunden, deren spektrales Maximum beispielsweise bei 520nm liegen kann. Eine derartige Lichtabgabe ist optisch von der blauen Lichtabgabe im Haupthärtmodus unterscheidbar, aber es wird genügend Energie im spektralen Empfindlichkeitsmaximum von Campherchinon (470nm) bereitgestellt, um die erwünschte Vorhärtung zu gewährleisten.

### [Hieran schließen sich die Vorteile der Unteransprüche an]

Weitere Vorteile, Einzelheiten und Merkmale ergeben sich aus der nachfolgenden Beschreibung eines Ausführungsbeispiels anhand der Zeichnung.

Es zeigen:
- Fig.1: ein erfindungsgemäßes Lichthärtgerät in einer Ausführungsform;
- Fig.2: eine Dentalrestauration in einer Ausführungsform; und
- Fig.3: eine schematische Darstellung der verwendeten Wellenlängen für das Lichthärt gerät und die Dentalrestauration gemäß der Erfindung.

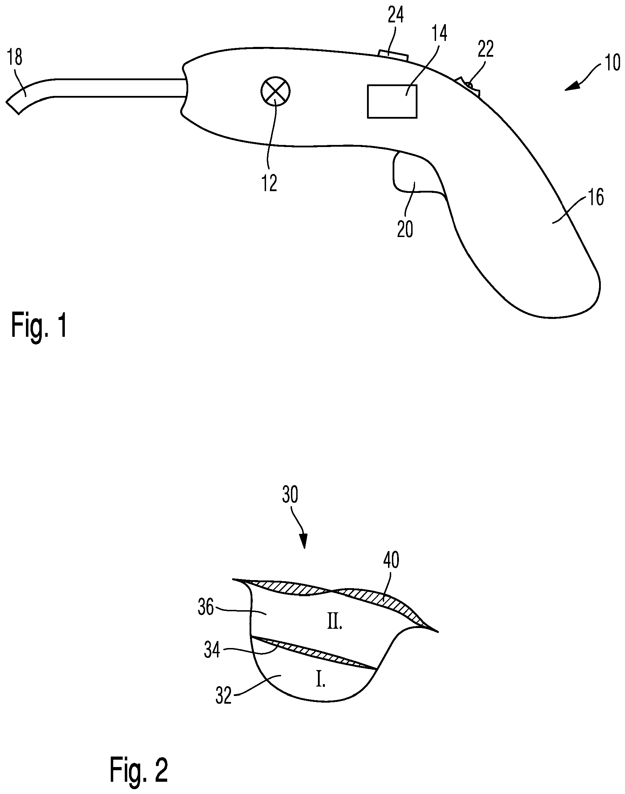

Das in Fig.1 dargestellte Lichthärtgerät 10 weist eine Lichtquelle 12 und eine Steuervorrichtung 14 auf, die in an sich bekannter Weise in einem pistolenförmigen Gehäuse 16 aufgenommen sind.

Vorne aus dem Gehäuse 16 des Lichthärtgeräts 10 erstreckt sich ein Lichtleitstab 18 heraus, der in an sich bekannter Weise an seinem distalen Ende abgekröpft oder gekrümmt ist, um die Lichtbeaufschlagung auch von schlecht zugänglichen Stellen zu ermöglichen.

Das erfindungsgemäße Lichthärtgerät weist ein Auslöseelement 20 auf, das im dargestellten Ausführungsbeispiel in Doppelfunktion arbeitet. Bei diesem Beispiel ist es an der Stelle angeordnet, an der der Abzug einer Pistole angeordnet wäre. Durch Druckbetätigung mit dem Zeigefinger des Benutzers wird das Lichthärtgerät zunächst in einem sogenannten Vorhärtmodus eingeschaltet, in welchem Licht mit einer reduzierten Dosis von der Lichtquelle 12 und damit von dem vorderen Ende des Lichtleitstabs 18 abgegeben wird. Hierbei ist mit Dosis das Produkt aus Leistung und Zeit gemeint, so dass die Lichtabgabe mit einer Dosis erfolgt, die gegenüber der Dosis des Normalhärtmodus vermindert ist.

Wenn beispielsweise im Normalhärtmodus eine Einschaltung der Lichtquelle 12 mit einer Leistung von 4W für 10 Sekunden erfolgt, kann in dem Vorhärtmodus die Lichtabgabe beispielsweise 400mW und ebenfalls 10 Sekunden erfolgen, oder aber - im anderen Extremfall - für lediglich eine Sekunde bei ebenfalls 4W. In beiden Fällen liegt die gleiche reduzierte Dosis vor.

Durch Betätigung des Auslöseelements 20 lässt sich die Lichtquelle 12 einschalten, und zwar in dem dargestellten Ausführungsbeispiel in dem Modus, in dem sich das Lichthärtgerät basierend auf den Informationen, die in der Steuervorrichtung 14 abgelegt sind, befindet. Beispielsweise kann festgelegt sein, dass sich das Lichthärtgerät beim ersten Einschalten im Vorhärtmodus befindet. In diesem Modus wird beim Betätigen des Auslöseelements 20 Licht mit reduzierter Dosis aus dem Lichtleitstab 18 abgegeben.

Diese Lichtabgabe in dem Vorhärtmodus kann durch ein Blinken, einen Farbwechsel oder in beliebiger geeigneter Form signalisiert werden, beispielsweise auch über die in Fig.1 dargestellte Signal-LED 22, die den Vorhärtmodus signalisiert.

Für einen Moduswechsel wird das Auslöseelement 20 in einer beliebigen anderen, jedoch unüblichen Weise betätigt. Hierbei ist es beispielsweise möglich, den Moduswechsel durch Eindrücken des Auslöseelements 20 für mehr als eine Sekunde einzuleiten. Eine andere Möglichkeit besteht darin, den Moduswechsel durch eine kurzzeitige Doppelbetätigung des Auslöseelements 20 einzuleiten. Der Moduswechsel lässt sich auch signalisieren, beispielsweise durch ein entsprechendes Bestätigungsaufleuchten der Signal-LED 22, oder durch eine kurzzeitige Bestätigungs-Lichtabgabe der Lichtquelle 12.

In einer modifizierten Ausgestaltung ist es vorgesehen, die Vorhärtung mit einem separaten Einschaltknopf oder einer sonstigen separaten Einschaltfunktion einzuschalten.

Bevorzugt bleibt das Lichthärtgerät auch beim Ausschalten und Ablegen in dem eingestellten Modus.

Alternativ ist es aber auch möglich, beim "Kaltstart" des Lichthärtgeräts stets einen Modus, beispielsweise den Vorhärtmodus, zu wählen, damit in aller Regel stets die Vorhärtung vor der Haupthärtung vorgenommen wird.

Das in Fig.1 dargestellte Lichthärtgerät weist auch einen sogenannten Modus mit erhöhter Leistungsabgabe auf, der durch eine Flashtaste 24 eingeleitet wird. In diesem Modus, der nur in dem Haupthärtmodus zur Verfügung steht, wird kurzzeitig mit sehr hoher Lichtleistung gearbeitet, beispielsweise mit 10 oder 12W, dafür aber nur für einen sehr begrenzten Zeitraum wie 1 Sekunde oder 1,5 Sekunden. Es ist günstig, diese Modus nur durch die Flashtaste freizugeben, um eine etwaige Gesundheitsgefährdung durch Verbrennen bei unbeabsichtigten Einschalten im Modus mit erhöhter Leistungsabgabe zu verhindern.

Es ist auch bevorzugt, der Flashtaste 24 eine echte Tastfunktion zu geben, so dass der Modus mit erhöhter Leistungsabgabe nur dann eingeleitet wird, wenn die Flashtaste 24 tatsächlich während des Betätigens des Auslöseelements 20 niedergedrückt wird. Dieser Modus kann auch zusätzlich optisch signalisiert werden.

Erfindungsgemäß ist es günstig, wenn die Einschaltzeiten im Vorhärtmodus und im Haupthärtmodus unabhängig voneinander eingestellt sind, beziehungsweise programmiert werden können. Wenn die Einstellung der Belichtungszeit im Normalhärtmodus geändert wird, muss dies nicht zur Änderung der Belichtungszeit im Vorhärtmodus führen.

In vorteilhafter Ausgestaltung ist es vorgesehen, einen Sensor, der hier nicht dargestellt ist, so anzubringen, dass er den Zielbereich der Lichtquelle des Lichtleitstabs 18 beaufschlagt. Hiermit lässt sich die ausreichende Lichtbeaufschlagung des Dentalrestaurationsmaterials sowohl im Haupthärtmodus als auch im Vorhärtmodus kontrollieren.

Erfindungsgemäß ist es günstig, wenn zwischen Vorhärtmodus und Haupthärtmodus das Lichthärtgerät ausgeschaltet ist, und insofern gleichsam ein "Modelliermodus" besteht.

Aus Fig.2 ist schematisch ersichtlich, in welcher Weise eine Dentalrestauration aufgebracht werden kann. Eine Kavität 30 wird zunächst mit einer ersten Schicht 32 aus Dentalrestaurationsmaterial in an sich bekannter Weise gefüllt. Diese ist in diesem Zustand zunächst noch flüssig, wenn auch nicht extrem dünnflüssig. Das Lichthärtgerät wird eingeschaltet, und die erste Schicht 32 wird hierdurch von dem flüssigen in einen zähviskosen Zustand überführt. Zugleich erfolgt hierdurch eine minimale Volumenreduktion 34, was einem entsprechenden Niedersinken des Schichtpegels auf seiner Oberseite entspricht. In diesen Zustand ist die Schicht 32 noch gut verformbar und etwas klebrig, so dass sie auch gut an einer weiteren Schicht II anhaftet.

Diese zweite Schicht 36 wird hieran anschließend aufgebracht, wobei sie sich bereits beim Aufbringen gut mit der Härteschicht 32 verbindet.

Hieran anschließend wird auch die zweite Schicht einem Vorhärtmodus unterzogen. In diesem Schritt wird auch die zweite Schicht in einen zäh-viskosen Zustand überführt und bindet sich zugleich enger an die erste Schicht 31.

Hieran anschließend wird das Lichthärtgerät ausgeschaltet oder zumindest von dem Dentalrestaurationsmaterial entfernt. Die Füllung der Kavität 30 mit dem Dentalrestaurationsmaterial wird visuell kontrolliert und es wird gegebenenfalls das Dentalrestaurationsmaterial mit einem hierfür geeigneten Dentalinstrument erneut angedrückt. Hierdurch lassen sich Randspalten sicher vermeiden. Ferner besteht die Möglichkeit, noch eine Umformung der zweiten Schicht oberflächenseitig vorzunehmen, was mit der schraffierten Schichtänderung 40 gemäß Fig. 2 symbolisiert ist. Insofern kann dieser Ruhemodus auch als Modelliermodus bezeichnet werden.

In weiterer modifizierter Ausgestaltung is es vorgesehen, anstelle oder zusätzlich zum Modellieren kurzerhand das überschüssige Material zu entfernen. Dies kann zum Beispiel mittels eines Poliergummis oder eines Fräsers realisiert werden. Nach der Vorhärtung hat das Material oberflächlich eine gewisse Härte, während es noch nicht so hart is, dass eine Überschussentfernung eine aufwendige spanabhebende Bearbeitung erfordert.

Es versteht sich, dass bei Bedarf ein entsprechendes Andrücken und zumindest eine visuelle Kontrolle auch zwischen dem Aufbringen der ersten und der zweiten Schicht realisiert werden kann.

In modifizierter Ausgestaltung ist lediglich eine Schicht vorgesehen. Auch hier kann anschließend an die Aufbringung der Schicht und die Vorhärtung im Vorhärtmodus eine visuelle Kontrolle und gegebenenfalls ein Andrücken und/oder ein Modellieren erfolgen, entsprechend der Schichtänderung 40 gemäß Fig.2.

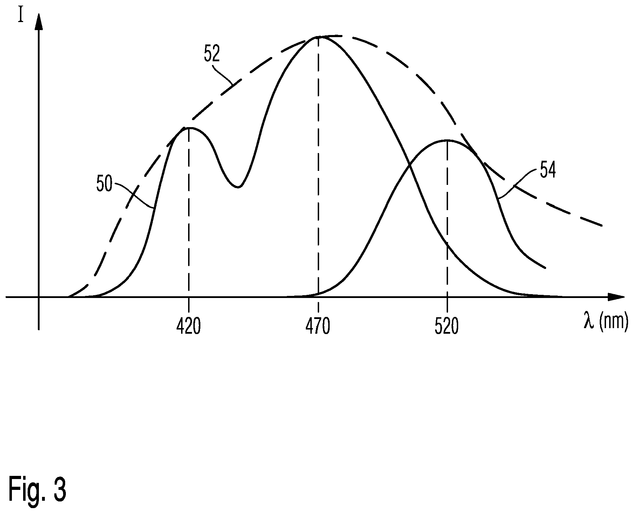

Aus Fig.3 ist ersichtlich, in welcher Weise ein Moduswechsel auch durch eine Farbwechsel der Lichtabgabe der Lichtquelle 12 symbolisiert werden kann. Die Lichtquelle 12, die eine Mehrzahl vom im Wesentlichen nebeneinander angeordneten LED-Chips umfasst, weist ihr Emissionsmaximum bei den meisten Chips bei einer Wellenlänge von 470nm auf. Ein Chip emittiert maximal bei 420nm, so dass sich gemäß Fig. 2 die Kurve 50 der Emission der Lichtquelle 12 im Normalmodus ergibt.

Diese zeigt eine deutliche Überlappung der Empfindlichkeitskurve 52 von Campherchinon, das als Fotoinitiator für polymerisierbares Dentalmaterial gerne verwendet wird.

In der dargestellten Ausführungsform ist ein weiterer Chip mit einem Emissionsmaximum von 520 nm vorgesehen, der dementsprechend ein Emissionsspektrum gemäß der Kurve 54 hat.

Dieser lässt sich nun gegebenenfalls allein für den Vorhärtmodus einschalten, oder bei Bedarf zusammen mit einem der Chips, deren Emissionsmaximum bei 470nm liegt. Hierdurch entsteht eine grünliche Verfärbung des emittierten Lichts, und der Benutzer des Lichthärtgeräts erhält hierdurch eine visuelle Rückkopplung über den eingeschalteten Zustand.

In einer modifizierten Ausgestaltung ist es vorgesehen, die Vorhärtung über das ausschließliche Einschalten eines Licht in der Farbe grün emittierenden Chips zu signalisieren. Damit besteht die Möglichkeit, die Vorhärtung über die Lichtabgabe von blau mit reduzierter Leistung, gegebenenfalls mit einer zusätzlichen Signalisierfunktion wie Blinken oder dergleichen, blau mit etwas Beimischung von grün ausschließlich über grün vorzusehen und zugleich zu realisieren.

Es versteht sich, dass zusätzlich oder an Stelle dessen auch weitere optische Signalisierungen möglich sind, beispielsweise ein Blinken, ein An/Abschwellen der Lichtabgabe im Vorhärtmodus oder auch ein Einschalten der Signal-LED 22, oder beispielsweise ein akustisches Signal.

## Patentansprüche

1. Lichthärtgerät für Dentalrestaurationsmaterialien, mit einer Lichtquelle (12) sowie mit einer Steuervorrichtung (14) für das Lichthärtgerät (10), die in der Lage ist, die Lichtquelle (12) mit unterschiedlichen Leistungen einzuschalten, wobei das Lichthärtgerät (10) zwei Modi aufweist, einen Vorhärtmodus und einen Normalhärtmodus, wobei das Lichthärtgerät (10) ein Auslöseelement (20) aufweist, über welches das Lichthärtgerät (10), bei Betätigung durch den Benutzer, in einem Vorhärtmodus zum Vorhärten des Dentalrestaurationsmaterials einschaltbar ist, in welchem Licht in einer gegenüber dem Normalhärtmodus reduzierten Dosis abgegeben wird, wobei die Steuervorrichtung (14) eine Steuerung der Lichtdosis des Produkts aus Leistung und Zeit vornimmt, und dass die Steuervorrichtung (14) die reduzierte Dosis signalisiert, **dadurch gekennzeichnet, dass** das Lichthärtgerät (10) im Normalmodus oder im Vorhärtmodus nach einem Wiedereinschalten in den gleichen Modus zurückkehrt.

2. Lichthärtgerät nach Anspruch 1, **dadurch gekennzeichnet, dass** die reduzierte Dosis eine reduzierte Zeitdauer aufweist, während welcher das Lichthärtgerät (10) zum Vorhärten eingeschaltet ist, wobei reduziert eine Zeitdauer bedeutet, die zwischen 1 ms und 10 s.-.

3. Lichthärtgerät nach Anspruch 1 oder 2, **dadurch gekennzeichnet, dass** die reduzierte Dosis durch reduzierte Leistungsabgabe der Lichtquelle (12) bereitgestellt ist und dass die reduzierte Leistungsabgabe zwischen 5 mW/cm² bis 500 mW/cm² beträgt.

4. Lichthärtgerät nach einem der vorhergehenden Ansprüche, **dadurch gekennzeichnet, dass** die Steuervorrichtung (14) die reduzierte Dosis über eine Änderung der Lichtabgabe der Lichtquelle (12) signalisiert, insbesondere über einen Farbwechsel oder ein gegebenenfalls wiederholtes Ein- und Ausschalten oder Blinken der Lichtquelle (12).

5. Lichthärtgerät nach einem der vorhergehenden Ansprüche, **dadurch gekennzeichnet, dass** eine Betätigung des Auslöseelements (20) für eine Zeitdauer, die geringer als ein Schwellwert ist, das Lichthärtgerät (10) in einem Vorhärtmodus einschaltet und die Betätigung des Auslöseelements (20) für eine Zeitdauer, die größer als ein Schwellwert ist, in dem Normalhärtmodus einschaltet.

6. Lichthärtgerät nach einem der vorhergehenden Ansprüche, **dadurch gekennzeichnet, dass** ein Vorhärtmodus des Lichthärtgeräts (10) unabhängig von einem Haupthärtmodus einschaltbar und eine Pause zwischen Vorhärtmodus und Haupthärtmodus nach Belieben des Benutzers wählbar ist.

7. Lichthärtgerät nach einem der vorhergehenden Ansprüche, **dadurch gekennzeichnet, dass** das Lichthärtgerät (10) bei Betätigung des Auslöseelements (20) zur Einschaltung des Vorhärtmodus für eine vorgegebene Zeitdauer im Vorhärtmodus mit reduzierter Leistung bleibt.

8. Lichthärtgerät nach einem der vorhergehenden Ansprüche, **dadurch gekennzeichnet, dass** die Einschaltdauer des Normalhärtmodus des Lichthärtgeräts (10) in an sich bekannter Weise einstellbar ist und die Einschaltzeit des Vorhärtmodus beim Einstellen der Belichtungszeit im Normalhärtmodus zusammen mit diesem geändert wird.

9. Lichthärtgerät nach einem der Ansprüche 1 bis 7, **dadurch gekennzeichnet, dass** die Einschaltzeit des Vorhärtmodus unabhängig von der Einstellung der Belichtungszeit im Normalhärtmodus gleich bleibt.

10. Lichthärtgerät nach einem der vorhergehenden Ansprüche, **dadurch gekennzeichnet, dass** das Lichhärtgerät mindestens zwei LED-Chips mit unterschiedlichem Emissionsmaximum aufweist, von denen der mit der längeren Wellenlänge des Emissionsmaximum, ausschließlich im Hauptmodus des Lichthärtgeräts (10) einschaltbar ist.

11. Lichthärtgerät nach einem der vorhergehenden Ansprüche, **dadurch gekennzeichnet, dass** das Lichthärtgerät (10) mindestens zwei LED-Chips mit Emissionsspektren mit unterschiedlichen Emissionsmaxima aufweist und dass die relative Emissonsintensität bei den Emissionsmaxima zwischen dem Vorhärtmodus und dem Normalhärtmodus geändert ist.

12. Lichthärtgerät nach einem der vorhergehenden Ansprüche, **dadurch gekennzeichnet, dass** die Steuervorrichtung (14) die reduzierte Leistung durch abwechselndes Ein- und Ausschalten der Lichtquelle (12), durch einen Farbwechsel dieser, durch eine Zusatz-Lichtquelle (12) und/oder ein akustisches Signal signalisiert und/oder eine zusätzliche Anzeige.

13. Lichthärtgerät nach einem der vorhergehenden Ansprüche, **dadurch gekennzeichnet, dass** das Lichthärtgerät (10) einen Sensor aufweist, der auf den Zielbereich der Lichtquelle (12) gerichtet ist und mindestens einen physikalischen Parameter des Dentalrestaurationsmaterials während dessen Härtung erfasst.

14. Lichthärtgerät nach einem der vorhergehenden Ansprüche, **dadurch gekennzeichnet, dass** ein Sensor des Lichhärtgeräts, der auf den Zielbereich der Lichtquelle (12) gerichtet ist, mit der Steuervorrichtung (14) verbunden ist und die Lichtquelle (12) im Vorhärtmodus und/oder im Normalhärtmodus abschaltet, wenn das Ausgangssignal des Sensors die ausreichende Lichtbeaufschlagung signalisiert.

15. Lichthärtgerät nach einem der vorhergehenden Ansprüche, **dadurch gekennzeichnet, dass** das Lichthärtgerät (10) als Handgerät ausgebildet ist und die Steuervorrichtung (14) das Lichthärtgerät bei Aufnahme in die Hand des Benutzers einschaltet und die Erstbetätigung des Auslöseelements (20) das Lichthärtgerät (10) in den Vorhärtmodus mit reduzierter Dosis einschaltet.

16. Lichthärtgerät nach einem der vorhergehenden Ansprüche, **dadurch gekennzeichnet, dass** das Lichthärtgerät (10) nach Beendigung des Vorhärtmodus einen Standby-Modus einnimmt, aus welchem es durch Betätigung des Auslöseelements (20) in den Normalhärtmodus zu einem durch den Benutzer gewählten Zeitpunkt einschaltbar ist.

17. Lichthärtgerät nach einem der vorhergehenden Ansprüche, **dadurch gekennzeichnet, dass** das Auslöseelement (20) mehrere Tasten aufweist, über welche der erwünschte Modus ausgelöst wird und eine Bedientaste, über welche ein Modus oder ein Programm des Lichthärtgeräts (10) einstellbar ist.

18. Lichthärtgerät nach einem der vorhergehenden Ansprüche, **dadurch gekennzeichnet, dass** eine Zweitbetätigung des Auslöseelements (20) den Vorhärtmodus des Lichthärtgeräts (10) ausschaltet.

## Claims

1. A light curing device for dental restoration materials, comprising a light source (12) and a control device (14) for the light curing device (10), which control device is capable of switching on the light source (12) at different levels of power, wherein the light curing device (10) has two modes, a pre-curing mode and a regular curing mode, wherein the light curing device (10) comprises an actuation element (20) which can be used, upon actuation by the user, to switch on the light curing device (10) in a pre-curing mode for pre-curing the dental restoration material in which light is output at a reduced dosage compared to the regular curing mode, wherein the control device (14) controls the dosage of light of the product of power and time, and wherein the control device (14) signalizes the reduced dosage, **characterized in that** in the regular mode or in the pre-curing mode, the light curing device (10) returns to the same mode after renewed switching on.

2. The light curing device as claimed in claim 1, **characterized in that** the reduced dosage comprises a reduced period of time during which the light curing device (10) is switched on for pre-curing, wherein a reduced period of time is a period of time between 1 milliseconds and 10 seconds.

3. The light curing device as claimed in claim 1 or 2, **characterized in that** the reduced dosage is provided by a reduced power output of the light source (12), and **in that** the reduced power output amounts to between 5 mW/cm² and 500 mW/cm².

4. The light curing device as claimed in any of the preceding claims, **characterized in that** the control device (14) signalizes the reduced dosage by changing the light output of the light source (12), in particular by a change in color or possibly by repeatedly switching on and off or a flashing of the light source (12).

5. The light curing device as claimed in any of the preceding claims, **characterized in that** an actuation of the actuation element (20) for a period of time which is shorter than a threshold value switches the light curing device (10) to a pre-curing mode, and **in that** the actuation of the actuation element (20) for a period of time which is longer than a threshold value switches the light curing device (10) to a regular curing mode.

6. The light curing device as claimed in any of the preceding claims, **characterized in that** a pre-curing mode of the light curing device (10) can be switched on independently of a main curing mode, and **in that** a break can be selected between the pre-curing mode and the main curing mode at discretion of the user.

7. The light curing device as claimed in any of the preceding claims, **characterized in that** upon actuation of the actuation element (20) to switch on the pre-curing mode the light curing device (10) remains in the pre-curing mode at reduced power for a predefined period of time.

8. The light curing device as claimed in any of the preceding claims, **characterized in that** the on-time of the regular curing mode of the light curing device (10) can be adjusted in a way known per se, and **in that** the on-time of the pre-curing mode is changed upon adjusting the exposure time in the regular curing mode along with it.

9. The light curing device as claimed in claims 1 to 7, **characterized in that** the on-time of the pre-curing mode remains the same independently of the exposure time setting in the regular curing mode.

10. The light curing device as claimed in any of the preceding claims, **characterized in that** the light curing device comprises at least two LED chips with different emission maxima, of which that having the longer wavelength of the emission maximum, can be switched on exclusively in the main mode of the light curing device (10) .

11. The light curing device as claimed in any of the preceding claims, **characterized in that** the light curing device (10) comprises at least two LED chips comprising emission spectra with different emission maxima, and **in that** the relative intensity of emissions in the emission maxima is changed between the pre-curing mode and the regular curing mode.

12. The light curing device as claimed in any of the preceding claims, **characterized in that** the control device (14) signalizes the reduced level of power by alternatingly switching on and off the light source (12), by a change in color thereof, with the help of an additional light source (12) and/or an acoustic signal and/or an additional display.

13. The light curing device as claimed in any of the preceding claims, **characterized in that** the light curing device (10) comprises a sensor which is directed at the target area of the light source (12) and detects at least one physical parameter of the dental restoration material while it is being cured.

14. The light curing device as claimed in any of the preceding claims, **characterized in that** a sensor of the light curing device which is directed at the target area of the light source (12) is connected to the control device (14) and switches off the light source (12) in the pre-curing mode and/or in the regular mode when the output signal of the sensor signalizes sufficient light exposure.

15. The light curing device as claimed in any of the preceding claims, **characterized in that** the light curing device (10) is configured as a hand-held device, and **in that** the control device (14) switches on the light curing device when it is picked up by the hand of a user, and **in that** upon first actuation of the actuation element (20) the light curing device (10) is switched to the pre-curing mode at a reduced dosage.

16. The light curing device as claimed in any of the preceding claims, **characterized in that** when the pre-curing mode has been finished the light curing device (10) assumes a standby-mode from which it can be switched to the regular curing mode upon actuation of the actuation element (20) at a point in time selected by the user.

17. The light curing device as claimed in any of the preceding claims, **characterized in that** the actuation element (20) comprises several buttons which can be used to activate the desired mode, and a control button which can be used to adjust a mode or a program of the light curing device (10).

18. The light curing device as claimed in any of the preceding claims, **characterized in that** a second actuation of the actuation element (20) switches off the pre-curing mode of the light curing device (10).

## Revendications

1. Appareil de photopolymérisation pour matériaux de restauration dentaire, avec une source de lumière (12) ainsi qu'avec un dispositif de commande (14) pour l'appareil de photopolymérisation (10), qui est en mesure d'allumer la source de lumière (12) avec des puissances différentes, où l'appareil de photopolymérisation (10) présente deux modes, un mode de polymérisation préliminaire et un mode de polymérisation normale, où l'appareil de photopolymérisation (10) présente un élément de déclenchement (20), par lequel l'appareil de photopolymérisation (10), lors de l'actionnement par l'utilisateur, peut être mise en marche dans un mode de polymérisation préliminaire pour le polymérisation préliminaire du matériau de restauration dentaire, où la lumière est émise à une dose réduite par rapport au mode de polymérisation normale, et le dispositif de commande (14) effectue une commande de la dose de lumière du produit de la puissance et du temps, et en ce que le dispositif de commande (14) signale la dose réduite, **caractérisé en ce que** l'appareil de photopolymérisation (10) en mode normal ou en mode de polymérisation préliminaire revient dans le même mode après une remise en marche.

2. Appareil de photopolymérisation selon la revendication 1, **caractérisé en ce que** la dose réduite présente une durée réduite pendant laquelle le photopolymérisateur (10) est allumé pour la polymérisation préliminaire, où réduit signifie une durée qui se situe entre 1 ms et 10 s.

3. Appareil de photopolymérisation selon la revendication 1 ou 2, **caractérisé en ce que** la dose réduite est fournie par une sortie de puissance réduite de la source de lumière (12) et **en ce que** la sortie de puissance réduite est comprise entre 5 mW/cm² et 500 mW/cm².

4. Appareil de photopolymérisation selon l'une des revendications précédentes, **caractérisé en ce que** le dispositif de commande (14) signale la dose réduite par une modification de l'émission lumineuse de la source lumineuse (12), en particulier par un changement de couleur ou une mise en marche et un arrêt ou un clignotement éventuellement répétés de la source lumineuse (12).

5. Appareil de photopolymérisation selon l'une des revendications précédentes, **caractérisé en ce que** l'actionnement de l'élément de déclenchement (20) pendant une durée inférieure à une valeur de seuil met en marche le photopolymérisateur (10) dans un mode de polymérisation préliminaire et l'actionnement de l'élément de déclenchement (20) pendant une durée supérieure à une valeur seuil le met en marche dans le mode de polymérisation normal.

6. Appareil de photopolymérisation selon l'une des revendications précédentes, **caractérisé en ce qu'**un mode de polymérisation préliminaire de l'appareil de photopolymérisation (10) peut être mis en marche indépendamment d'un mode de polymérisation principal et **en ce qu'**une pause entre le mode de polymérisation préliminaire et le mode de polymérisation principal peut être sélectionnée au gré de l'utilisateur.

7. Appareil de photopolymérisation selon l'une des revendications précédentes, **caractérisé en ce que**, lorsque l'élément de déclenchement (20) est actionné pour activer le mode de polymérisation préliminaire, l'appareil de photopolymérisation (10) reste en mode de polymérisation préliminaire à puissance réduite pendant une durée prédéterminée.

8. Appareil de photopolymérisation selon l'une des revendications précédentes, **caractérisé en ce que** la durée d'activation du mode de polymérisation normal du photopolymérisateur (10) est réglable de manière connue en soi et que la durée d'activation du mode de polymérisation préliminaire est modifiée en même temps que le mode de polymérisation normal lors du réglage du temps d'exposition dans ce dernier.

9. Appareil de photopolymérisation selon l'une des revendications 1 à 7, **caractérisé en ce que** le temps d'activation du mode de polymérisation préliminaire reste inchangé indépendamment du réglage du temps d'exposition en mode de polymérisation normal.

10. Appareil de photopolymérisation selon l'une des revendications précédentes, **caractérisé en ce que** l'appareil de photopolymérisation présente au moins deux puces LED avec un maximum d'émission différent, et celle avec la longueur d'onde de maximum d'émission la plus longue, peut être allumée exclusivement en mode principal de l'appareil de photopolymérisation (10).

11. Appareil de photopolymérisation selon l'une des revendications précédentes, **caractérisé en ce que** l'appareil de photopolymérisation (10) comporte au moins deux puces LED avec des spectres d'émission présentant un maximum d'émission différent et **en ce que** l'intensité d'émission relative aux maximum d'émission est modifiée entre le mode de polymérisation préliminaire et le mode de polymérisation normale.

12. Appareil de photopolymérisation selon l'une des revendications précédentes, **caractérisé en ce que** le dispositif de commande (14) signale la puissance réduite par la mise en marche et l'arrêt alternés de la source de lumière (12), par un changement de couleur de celle-ci, par une source de lumière supplémentaire (12) et/ou par un signal acoustique et/ou par un affichage supplémentaire.

13. Appareil de photopolymérisation selon l'une des revendications précédentes, **caractérisé en ce que** l'appareil de photopolymérisation (10) comporte un capteur qui est dirigé vers la zone cible de la source lumineuse (12) et qui détecte au moins un paramètre physique du matériau de restauration dentaire pendant son polymérisation.

14. Appareil de photopolymérisation selon l'une des revendications précédentes, **caractérisé en ce qu'**un capteur de l'appareil de photopolymérisation, qui est dirigé vers la zone cible de la source de lumière (12), est relié au dispositif de commande (14) et éteint la source de lumière (12) en mode de polymérisation préliminaire et/ou en mode de polymérisation normale lorsque le signal de sortie du capteur signale que l'exposition à la lumière est suffisante.

15. Appareil de photopolymérisation selon l'une des revendications précédentes, **caractérisé en ce que** l'appareil de photopolymérisation (10) est conçu comme un appareil portatif et que le dispositif de commande (14) met en marche l'appareil de photopolymérisation lorsqu'il est pris dans la main de l'utilisateur et que le premier actionnement de l'élément de déclenchement (20) met en marche l'appareil de photopolymérisation (10) dans le mode de polymérisation préliminaire avec une dose réduite.

16. Appareil de photopolymérisation selon l'une des revendications précédentes, **caractérisé en ce que** l'appareil de photopolymérisation (10), une fois le mode de polymérisation préliminaire terminé, adopte un mode d'attente à partir duquel il peut être mis en marche en actionnant l'élément de déclenchement (20) pour passer au mode de polymérisation normal à un moment choisi par l'utilisateur.

17. Appareil de photopolymérisation selon l'une des revendications précédentes, **caractérisé en ce que** l'élément de déclenchement (20) comporte plusieurs touches permettant de déclencher le mode souhaité et une touche de commande permettant de régler un mode ou un programme de l'appareil de photopolymérisation (10).

18. Appareil de photopolymérisation selon l'une des revendications précédentes, **caractérisé en ce qu'**un deuxième actionnement de l'élément de déclenchement (20) désactive le mode de polymérisation préliminaire de l'appareil de photopolymérisation (10).
